# EUROPEAN PATENT APPLICATION

(11) **EP 4 357 915 A1**
(43) Date of publication of application: **24.04.2024**
(21) Application number: 22202104.0
(22) Date of filing: 18.10.2022
(51) Int. Cl.: G06F 9/4401

(54) **A COMPUTER PROGRAM GENERATING APPARATUS AND METHOD**

(71) Applicant: Nokia Solutions and Networks Oy, 02610 Espoo (FI)
(72) Inventor: Swalens, Janwillem, 2018 Antwerpen (BE); Daenen, Koen, 2018 Antwerpen (BE)
(74) Representative: IP HILLS NV

(57) **Abstract**

A computer program generating apparatus (100, 200) generates computer programs (104, 204) to measure a situational condition in an environment with sensors (131, 231), and thereto comprises:
- means for receiving an operator specification (113, 213) for primitive domain concepts named operators, the primitive domain concepts corresponding to sensors, actuators and/or available micro-functions;
- means for receiving a domain model specification (111, 211) for abstract domain concepts, comprising rules that define logical relations between the abstract domain concepts and primitive domain concepts;
- means for receiving a condition specification (112, 212) defining the situational condition using the abstract domain concepts;
- a solver module (101, 201) configured to use the rules of the domain model specification (111, 211) to transform the situational condition into one or more queries (102, 202); and
- a dataflow generator module (103, 203) configured to use the operator specification (113, 213) to transform the queries (102, 202) into respective dataflows (104, 204) corresponding to the computer programs.

## Description

### Technical Field

Various example embodiments relate to deployment and execution of computer programs to measure a situational condition based on input from sensors.

### Background

While certain quantities such as temperature, mass, or velocity can be measured directly with a dedicated sensor and digitally represented with a single number, phenomena or situational conditions such as "an unsafe situation at a pedestrian crossing", "a traffic jam", or "a violation of health and safety precautions" can only be derived indirectly based on input from multiple sensors or based on multiple observations from one or more sensors. Moreover, the use of multiple sensors, in particular the use of multiple types of sensors, may increase the accuracy of the derived situational condition significantly. A system that automates the collection and real-time processing of data from multiple sensors to derive a phenomenon or situational condition, and optionally the triggering of certain actions when the situational condition reaches certain states, is known as a dataflow processing system, abbreviated as dataflow. Such dataflows can be deployed in a cloud computing system as a service.

Serverless computing or Function-as-a-Service (FaaS) computing has emerged as a new paradigm for cloud computing. In the FaaS paradigm, programmers write their computer programs or applications as a number of separate so-called micro-functions or cloud functions. A micro-function is a small, short-running software function. It can be written in one of several supported programming languages and is typically uploaded to the cloud platform either as code or as a container image. Several such micro-functions are then combined to create an application or computer program, wherein each micro-function can trigger other micro-functions, for instance through HTTP requests or through messages posted in a message queue. The combined micro-functions thus form a computer program, application or dataflow. The cloud computing platform takes care of the orchestration of the micro-functions: starting and provisioning the servers whereon the micro-functions are run, scaling them, and billing for server usage, typically using a "pay-as-you-go" pricing model.

### Summary

At present, composing micro-functions into an application or larger computer program is a manual process. A computer programmer must manage the dependencies between micro-functions and ensure that each micro-function correctly triggers any subsequent micro-functions. The application as a graph of micro-functions must be constructed explicitly by the computer program developer.

Changes in the context or environment of an application can require the computer programmer to make substantial changes in the application. For example, depending on which sensors are available in the environment, different programs may need to be deployed that achieve the same goal but have different inputs. Further, the choice of how the dataflow is constructed can influence its operational cost, as well as other metrics, like its accuracy, latency or reliability. Currently, the programmer must design a dataflow or graph of micro-functions manually and must deploy the dataflow manually on a cloud computing platform. The manual design and deployment becomes problematic when the number of options to build the dataflow is very large and/or the options vary over time. In practice, this makes optimal design and execution of applications that depend on a high number of dynamically available sources of data quasi-impossible.

Existing systems generally can be divided into two categories. The first category comprises tools to compose dataflows by orchestrating micro-functions. The second category comprises tools to generate multiple implementations of a computer program.

The major cloud vendors provide tools to orchestrate workflows of micro-functions on their cloud platform. Examples are AWS Step Functions, Amazon States Language, Azure Logic Apps, Google Cloud Workflows, IBM Cloud Functions, Oracle Cloud Functions. These tools allow the composition and orchestration of micro-functions using a JSON or YAML based format. However, it remains up to the developer to manage the dependencies between micro-functions and to construct the dataflow graph manually. In other words, the developer must manually ensure that each micro-function calls its successors in the dataflow. Moreover, for any change, the dataflow needs to be recomposed, which is infeasible in a frequently changing environment. The existing workflow orchestrating tools do not generate alternative implementations, do not select an optimal implementation in view of for instance available sensors, and do not allow automatic swapping between different implementations of a dataflow to measure a situational condition.

Jolie is a programming language for service orchestration that allows a programmer to express how services like micro-functions are orchestrated and composed into a bigger application. Also here, the programmer must still manually compose the application by assigning the correct output of one service to the correct input of the next one. Although this language provides a consistent interface for this task, it does not automate the task of generating computer programs from micro-services, let aside the generation of alternative implementations, the selection of an implementation, or the swapping between implementations.

The programming language Hydro allows to create a program automatically from a declarative specification. However, the generation of a list of alternative implementations is a future goal currently not provided. Selecting an optimal implementation in view of availability or cost of sensors, and/or swapping between different implementations consequently remains an unsolved problem.

Query languages for stream processing like Apache Beam are high-level languages wherein a query can be written, which is then compiled into a dataflow. Such languages also partly automate the process of constructing a dataflow. Similar to the tools here above, such query languages for stream processing do not generate alternative implementations, do not select an optimal implementation, and do not allow automatic swapping between implementations.

Rule engines like Rete, Esper, and Drools automatically compile rules into a network similar to a dataflow. Such rule engines automate the process of constructing a dataflow but are limited to a specific kind of queries. These systems have a limited set of operations, for instance specific aggregation functions like sum, count, average, specific windowing functions. Rules engines in other words are limited in the micro-functions that can be used to compose a dataflow, and in the way these micro-functions are combined to compose a dataflow. Further, similar to the tools here above, rules engines do not generate alternative implementations, do not select an optimal implementation, and do not allow automatic swapping between implementations.

World Wide Streams (WWS) is a platform developed at Nokia Bell Labs that allows a dataflow, a graph of micro-functions named operators, to be deployed across a set of processors. The operators can be written in different programming languages. A processor is a machine that will execute multiple operators written in the same programming language. In WWS, multiple implementations of a dataflow to measure the same situational condition must each be implemented manually by the developer. WWS does not allow to select an optimal one amongst different implementations and does not allow automatic switching between different implementations, i.e. different computer programs or dataflows that measure the same situational condition.

Summarizing, existing tools of the first category allow the developer to orchestrate micro-functions into a dataflow. However, they do not generate multiple implementations of a dataflow or computer program to measure the same situational condition, they do not allow to select an implementation, and do not allow to automatically switch at runtime between different implementations.

A second category of existing systems contains tools that allow to generate multiple implementations of a computer program. However, these tools do not generate dataflows from micro-functions and are as such not useful to generate computer programs that measure a situational condition based on input from a variety of sensors. Further, these tools do not allow to select an implementation or switch between implementations at runtime.

Context-oriented programming is a technique that allows an object to have multiple implementations of its functionality. Depending on the context, one of these implementations is activated. This technique is not directly applicable to the programming of dataflows or streaming systems, nor is it obvious how to adapt this technique to accommodate composing dataflows because it does not compose a program out of smaller parts like micro-functions.

PetaBricks is a programming language that allows a programmer to specify multiple implementations of multiple algorithms to solve the same problem. It then automatically tunes the program to select the optimal combination of implementations. PetaBricks uses the size of the data structure as selection criterium. If the input, for instance a matrix or list, is larger than a certain size, one implementation is used. Otherwise, a different implementation is used. PetaBricks is not directly applicable to the programming of dataflows or streaming systems, nor is it obvious how to apply this technique to compose dataflows because it does not compose a program out of smaller parts like micro-functions.

The scope of protection sought for various embodiments of the invention is set out by the independent claims.

The embodiments and features described in this specification that do not fall within the scope of the independent claims, if any, are to be interpreted as examples useful for understanding various embodiments of the invention.

Amongst others, it is an object of embodiments of the invention to provide an improved tool and method for generating computer programs or dataflows that allow to measure a situational condition based on input from sensors. More particularly, it is an object to provide an improved tool and method that allows to generate multiple implementations, i.e. multiple computer programs to measure the same situational conditions, and/or to automatically select an implementation, and/or to automatically switch between implementations at runtime.

This object is achieved, according to a first example aspect of the present disclosure, by a computer program generating apparatus as defined by claim 1, adapted to generate computer programs to measure a situational condition in an environment with sensors and to deploy and execute one of the computer programs to measure said situational condition based on input from one or more of said sensors, said computer program generating apparatus comprising:
- means for receiving an operator specification for primitive domain concepts named operators, said primitive domain concepts corresponding to sensors and/or actuators and/or available micro-functions, said operator specification defining inputs and/or outputs of said primitive domain concepts;
- means for receiving a domain model specification for abstract domain concepts, said domain model specification comprising rules that define logical relations between an abstract domain concept and one or more of said primitive domain concepts;
- means for receiving a condition specification defining said situational condition using said abstract domain concepts;
- a solver module configured to use said rules of said domain model specification to transform said situational condition into one or more queries, wherein a query comprises a chain of logical conditions that can be measured or calculated using said primitive domain concepts; and
- a dataflow generator module configured to use said operator specification to transform said one or more queries into respective dataflows corresponding to said computer programs.

Thus, embodiments of the invention concern an apparatus or tool to automatically compose micro-functions into one or plural dataflow programs that measure a situational condition. The composition relies on a description of available sensors, available actuators and available micro-functions. The micro-functions are automatically wired together by transforming the situational condition into one or plural queries that form a chain of logical conditions that can be measured by the available sensors and/or can be calculated by the available micro-functions. Each of the queries is then transformed into a dataflow that measures the situational condition using the operator specifications available for the sensors, actuators and micro-functions. The apparatus or tool automatically generates plural dataflows or computer programs that measure the same situational condition. These dataflows can rely on different sensors, actuators and micro-functions. As such, it will be possible to select a dataflow or to switch between dataflows at any point in time at least depending on the environment, i.e. depending on the available sensors, actuators and/or micro-functions at that point in time.

In the context of the present disclosure, the following definitions apply:

A value or a term corresponds to a piece of data used in the software program. Different types of values are distinguished as follows:
- A constant is a value that appears literally in the software program code. A constant can for instance be a number, e.g. 1, or a string, e.g. "text".
- An atom is a value equal to itself, like for instance blue, true, sum, etc.
- A variable is a placeholder or name for a value that may vary in different instances.
- A compound is a term or value that is composed of an atom and zero, one or more arguments. Examples of a compound are for instance sum(1, 2) or sum(1, sum(2, 3)).

A domain concept is a value, usually specific to the domain of the application. The arguments of a logical condition or logical relation are domain concepts. Two types of domain concepts are distinguished as follows:
- A primitive domain concept is a domain concept that can be measured directly through a single sensor or can be calculated directly through a single micro-function. A primitive domain concept hence corresponds to a value that is the output of a sensor, the input of an actuator, or the input or output of a micro-function. Examples of a primitive domain concept are for instance "temperature", "mass", "velocity", "time", etc.
- An abstract domain concept is a domain concept that can only be derived indirectly based on multiple observations from one or more sensors, and/or multiple calculations by one or more micro-functions. Examples of an abstract domain concept are for instance "an unsafe situation at a pedestrian crossing", "a traffic jam", "a violation of COVID safety precautions", etc.

A situational condition is an abstract domain concept that must be measured or determined by the computer program or dataflow to be generated. It is in other words the goal of the dataflow(s) that will be generated by embodiments of the present invention. Examples of situational conditions are for instance "collision possible" in the domain of cooperative intelligent transport systems (CITS) or "an unsafe contact" in the domain of pandemic transmission prevention.

A micro-function is a small, short-running software function that can be deployed on a cloud platform. A micro-function, sometimes also called "cloud function", can be written by a programmer in one of several supported programming languages. It is uploaded to a cloud platform either as code or as a container image. The cloud platform takes care of deploying and scaling micro-functions. Several micro-functions can be combined into an application, computer program or dataflow. Whereas micro-functions traditionally had to be connected manually, embodiments of the present invention allow automatic compilation of micro-functions into a dataflow.

An operator is a component of a dataflow program, for instance a micro-function. An operator corresponds to a single node in a dataflow graph. Different types of operators can be distinguished as follows:
- A source is an operator that has only outputs. It does not have any inputs and consequently typically represents an input node of a dataflow graph. A source corresponds to a sensor in the physical world.
- A sink is an operator that has only inputs. It does not have any outputs and consequently typically represents an output node of a dataflow graph. A sink corresponds to an actuator in the physical world.
- A micro-function has both inputs and outputs. It has been defined here above and typically represents an intermediate node in a dataflow graph.
- Built-in operators are specific operators created for instance to generate constant inputs, filter constant outputs, match values, combine values, etc.

A logical condition or logical relation is a compound term wherein the atom refers to a property, an event, or a primitive function. Consequently, three different types of logical conditions or relations are distinguished:
- A property is a relation that holds for a time period. The time period must not be specified explicitly. As an example of a property, the relation "position(Person1, Location2)" defines that Person1 is in Location 2 for a certain time interval.
- An event is a relation that occurs at a specific time instant. The time instant must not be specified explicitly. As an example of an event, the relation "enters(Person1, Area2)" defines that Person1 entered Area2 at a certain moment in time.
- A primitive function is a relation that can be calculated at runtime. Primitive functions are not time specific. As an example of a primitive function, the relation "smaller_than(X, 5)" defines that X must be smaller than 5, regardless of time.
The developer specifies each logical relation or condition that exists in the system, its type (property, event or primitive function), and the type of its arguments (e.g. Person, Location).

A rule is composed of antecedents and a consequent. The antecedents and the consequent are logical conditions or relations. The rule specifies that the consequent is solved when all antecedents are solved.

A dataflow is a computer program that automates the collection and real-time processing of data from multiple sensors in order to derive a situational condition. A dataflow is typically composed as a chain of micro-functions. A dataflow may also trigger certain actions when the situational condition is reached by generating input for one or more actuators. A dataflow can be deployed in a cloud platform as a service in which case the cloud platform takes care of the orchestration of the micro-functions in the dataflow: the cloud platform starts and provisions the servers whereon the micro-functions are run, scales the micro-functions, and bills the user for server usage through a "pay-as-you-go" payment model.

The operator specification describes expected inputs and outputs for each source (corresponding to a sensor), sink (corresponding to an actuator), and micro-function (corresponding to a data transformation that is available as a function). The operators themselves may be implemented in any one of several programming languages that are supported by the cloud platform. Additionally, the operator specification may describe metadata of the operator such as its accuracy, false positive rate, etc. The set of operator specifications jointly form the primitive domain concepts.

The domain model specifies abstract phenomena or situational conditions (i.e. abstract domain concepts) as properties, events, primitive functions and rules between these that put the abstract domain concepts in logical relationship with the primitive domain concepts.

In example embodiments of the computer program generating apparatus defined by claim 2, said solver module is configured to recursively solve conditions starting from said situational condition, and to solve a condition said solver module is adapted to:
- verify if said condition has a corresponding sensor specified in said operator specification and add said condition to a solution set if this is the case;
- verify if said condition has a corresponding micro-function specified in said operator specification and add said condition to said solution set if this is the case;
- verify if said condition has an argument that is a condition in itself, the latter being a lower-order condition, and to first solve said lower-order condition if this is the case.

Thus, the solver module generates a solution set, i.e. a set of conditions that is proven. The solver module thereto distinguishes conditions that can be measured directly because a corresponding sensor exists, conditions that can be calculated directly because a corresponding micro-function is available, and higher-order conditions that cannot be measured or calculated directly because lower-order conditions must be solved in order to solve the higher-order condition.

In example embodiments of the computer program generating apparatus defined by claim 3, to solve a condition said solver module is further configured to generate one or more proof trees, a proof tree being a tree wherein the root node corresponds to said condition and children nodes correspond to lower-order conditions to be solved to prove the parent node, and said solver module in order to prove said condition is further configured for said rules of said domain model specification to:
- verify if the consequent of said rule matches with said condition, and skip said rule if this is not the case;
- unify the arguments of said rule with the arguments of said condition, skip said rule if this fails, and substitute said condition by the antecedents of said rule if this succeeds;
- prove the antecedents of said rule recursively; and
- add the proof tree to said solution set if all antecedents can be proven, add plural proof trees to said solution set if at least one antecedent can be proven different ways, or add no result to the solution set if at least one antecedent cannot be proven.

Thus, the solver module uses the rules of the domain model specification to transform the higher-order conditions into lower-order conditions and finally into a query that consists only of conditions that can be measured directly or can be computed directly using the available sensors and micro-functions. The solver thereto generates proof trees. A proof tree is a tree with nodes and branches connecting child nodes to parent nodes. The root node of the proof tree is the condition to be proven. The children nodes then constitute the conditions used to prove the parent node. The rules of the domain model specification are compared with the condition to be proven. For a rule whose consequent matches with the condition, the arguments of the condition and the rule's consequent are unified. The unification is a process that maps each variable to a symbolic value such that the two become equal. The unification in other words leads to a substitution of variables by actual values. If the unification succeeds, the condition is substituted by the antecedents of the rule, and the same process is repeated recursively to prove each of the antecedents. The proof tree is added to the set of solutions if all antecedents can be proven recursively. If at least one of the antecedents cannot be proven, there is no solution. Plural proof trees are generated when an antecedent can be proven different ways. This may for instance be the case when plural sensors exist to measure the same variable, or when plural micro-functions exist to compute the same variable. The solver in sample embodiments of the present invention in other words generates all possible solutions for a condition to be solved.

It is noticed that in order to avoid infinite recursion, a rule is preferably skipped if a condition equivalent to the rule's consequent already appears higher up in the proof tree.

In example embodiments of the computer program generating apparatus defined by claim 4, to solve a condition said solver module is further configured to convert a proof tree into a query by a conjunction of the leaf nodes of said proof tree through the logical AND operator, said query hence comprising a chain of conditions that can be measured or calculated using said primitive domain concepts.

Thus, the solver generates a set of proof trees and adds these proof trees to the set of solutions. Thereupon, the solver converts each proof tree into a query. The query is composed of the logical AND conjunction of the leaves of the proof tree. For instance, the conjunction of leaves of a proof tree with leaves "a", "b" and "c" is "a AND b AND c". These leaves by definition constitute conditions that are solved by a direct sensor measurement or by a single micro-function.

In example embodiments of the computer program generating apparatus defined by claim 5, to transform a query into a computer program said dataflow generator module is configured to:
- transform said query into a graph of logical relations, a logical relation being either a property, an event or a primitive function, wherein a property corresponds to a predefined relation between arguments that lasts for a time interval, an event corresponds to a predefined relation between arguments that occurs at a time moment, and a primitive function corresponds to a predefined relation between arguments that can be calculated at runtime;
- replace relations in said graph of logical relations by respective subgraphs of operators; and
- transform said graph of logical relations into a dataflow.

Indeed, a query generated by the solver module is transformed into a dataflow in three steps. Firstly, the query, i.e. a conjunction of conditions, is transformed into a relation graph: this is a graph wherein the nodes correspond to logical relations, each logical relation either being a property, an event or a primitive function, as defined here above. Each condition in the query has one corresponding node in the relation graph. Secondly, each logical relation is replaced by a subgraph of operators, and at last, some additional nodes are added to turn the result into a complete dataflow.

In sample embodiments of the computer program generating apparatus defined by claim 6, to transform said query into a graph of logical relations, said dataflow generator is adapted to:
- create a node of said graph that can store inputs, outputs, constants and compound terms for each condition in said query;
- for an argument of said condition that is a constant or compound term, store said argument in said node;
- for an argument of said condition that is a variable:
   ▪ make the argument an output of said node if said condition is a property or event; or
   ▪ create a second node and make the argument an input of said node and an output of said second node if said condition is a primitive function;
- remove a node without input if said condition is a primitive function;
- generate said graph of logical relations as a cartesian product of said nodes.

As mentioned above, the dataflow generator converts a query, i.e. a conjunction of conditions, into a set of one or more equivalent relation graphs. For each condition in the query a corresponding node is created in the relation graph. This node comprises inputs, outputs, constants and compound terms of the relation. The arguments of the condition in the query are then mapped onto the inputs, outputs, constants and compound terms of the node in the relation tree. For a condition with n variable arguments, this generates 2ⁿ possible nodes, some of which can be removed. If the condition is a primitive function, it must have at least one input argument because every operator needs at least one input to trigger it. Nodes without inputs therefore can be removed. The remaining possible nodes of all conditions are combined via a cartesian product to create the relation graphs. Some graphs can be removed. Thereto, it is checked for every variable if at least one node exists that has the variable as output because the variable's value must be generated somewhere. If a variable exists that is not outputted by any of the nodes, the corresponding relational graph is impossible and may be removed.

In example embodiments of the computer program generating apparatus defined by claim 7, to replace a relation in said graph of logical relations by a subgraph of primitive domain concepts, said dataflow generator is adapted to:
- when said relation corresponds to a primitive function, map said relation to a corresponding operator using said operator specifications, said operator being a micro-function, and add operators to generate constant inputs and/or to filter constant outputs;
- when said relation corresponds to a property or event, map said relation to an operator using said operator specifications, said operator assigning data from a sensor to a data structure, and add operators to generate constant inputs and/or to filter constant outputs.

Thus, once the relational graphs are generated, the dataflow generator constructs subgraphs per relation. Relations that are primitive functions are mapped to operators that are micro-functions. Relations that contain a constant argument need to be preceded with an operator that generates the constant or need to be followed by an operator that filters for the constant. Relations that are properties or events are mapped onto operators that correspond to sensors. Again, relations that contain a constant argument need to be preceded with an operator that generates the constant or need to be followed by an operator that filters for the constant.

In example embodiments of the computer program generating apparatus defined by claim 8, to transform said graph of logical relations into a dataflow, said dataflow generator is adapted to:
- add a match operator when the same variable appears in the output of multiple operators, said match operator being adapted to maintain a history of events from all operators' input, and to output an event when a value matches for all;
- add a combine operator adapted to combine all nodes whose outputs are not connected; and
- add a sink operator, connected to said combine operator to transform logical variables into an event to complete a dataflow.

Indeed, in order to complete a dataflow, a few additional nodes may have to be added once the relations in the relation graph have been replaced by dataflow subgraphs. For instance, when the same variable appears as output of multiple operators, a match operator is added. The match operator keeps a history of events from every one of its inputs, and outputs an event when a value matches for all of them. The match operator also takes into account the timestamp of events: when a newer event from the same source arrives, the older event is deleted. As another example, a combine operator may have to be added. Nodes whose outputs are not connected to any further nodes, are connected as inputs to the combine operator, and the combine operator returns one event that combines the inputs. The combine operator also ensures that, if the same event travelled through different parts of the dataflow, only events with the same timestamp are combined. The combine operator may further be connected to a sink operator that transforms the logical variables back into an event and send it back to the sink to complete the dataflow.

Example embodiments of the computer program generating apparatus defined by claim 9, further comprise:
- means for receiving a cost per invocation of an operator according to a cost metric;
- means for receiving an invocation rate of an operator;
- an optimization module configured to determine for different computer programs corresponding to different queries that determine said situational condition a total cost and to select the computer program with lowest total cost for deployment.

Indeed, advantageous embodiments of the computer program generating apparatus generate plural dataflows or computer programs to measure the same situational condition and collect information on the cost per invocation of each operator, for instance as part of the operator specification. The cost may be a number referring to a certain cost metric, for instance the amount of milliseconds the operator runs per invocation, the energy usage per invocation, etc. In addition to the cost also the invocation rate of each operator is obtained, for instance the amount of images per second that a camera or sensor produces. An optimization module integrated in embodiments of the computer program generating apparatus then uses the operator cost per invocation and the operator invocation rate to calculate the total cost for each dataflow generated. This allows to automatically select and deploy the cheapest dataflow to measure a situational condition, i.e. the dataflow with lowest cost according to the considered cost metric.

In embodiments of the computer program generating apparatus defined by claim 10, said optimization module is configured to determine for a computer program said total cost as the sum of products of said cost per invocation and said invocation rate across all operators in said computer program.

Indeed, using the topology of the dataflow, the total cost of a dataflow can be calculated by multiplying the cost per invocation of an operator with the invocation rate of the operator, and summing these products across all operators present in the dataflow. Obviously, alternatives can be thought off to calculate the cost of a dataflow. For example, plural cost metrics may be combined to calculate a total cost of a dataflow, a weighted sum may be calculated wherein the weights depend on a second cost metric, etc.

Embodiments of the computer program generating apparatus defined by claim 11, further comprise a deployment module configured to:
- deploy a computer program to determine a situational condition while an other computer program to determine said situational condition is running;
- temporarily send input to both said computer program and said other computer program;
- determine when said computer program is fully initialized; and
- destroy said other computer program after said computer program is fully initialized.

Depending on the environment, for instance the availability of certain sensors or actuators, a computer program may be preferred over other computer programs to measure the same situational condition. As the environment may change over time, the preferred computer program to measure a situational condition may also change over time. Advantageous embodiments of the computer program generating apparatus hence generate plural dataflows or computer programs to measure the same situational condition and collect information on the environment in order to automatically swap between the different computer programs. Swapping between two computer programs that measure the same situational condition preferably follows a phase-in/phase-out strategy. Temporarily, the input is sent to both computer programs and both computer programs remain active. Only after the newly preferred computer program is fully initialized, the old computer program is destroyed.

In example embodiments of the computer program generating apparatus defined by claim 12, said deployment module is configured to determine that said computer program is fully initialized when said computer program starts to produce output for said situational condition.

Indeed, the new computer program to measure a situational condition may be considered to be fully initialized as soon as it starts to generate output. If for instance a moving average value over a 5 minutes time window is calculated by a dataflow, the new dataflow will start to produce output 5 minutes after deployment at the earliest. During that time interval, both the old dataflow and the new dataflow will remain active.

The object is achieved, according to a second example aspect of the present disclosure, by a computer program generating method as defined by claim 13, the method allowing to generate computer programs to measure a situational condition in an environment with sensors and to deploy and execute one of the computer programs to measure said situational condition based on input from one or more of said sensors, said computer program generating method comprising:
- receiving an operator specification for primitive domain concepts named operators, said operators comprising sensors and/or actuators and/or available micro-functions, said operator specification defining inputs and/or outputs of said primitive domain concepts;
- receiving a domain model specification for abstract domain concepts, said domain model specification comprising rules that define logical relations between an abstract domain concept and one or more of said primitive domain concepts;
- receiving a condition specification defining said situational condition using said abstract domain concepts;
- using said rules of said domain model specification to transform said situational condition into one or more queries, wherein a query comprises a chain of logical conditions that can be measured or calculated using said primitive domain concepts; and
- using said operator specification to transform said one or more queries into respective dataflows corresponding to said computer programs.

The object is achieved, according to a third example aspect of the present disclosure, to a controller comprising at least one processor and at least one memory including a computer program, as defined by claim 14, the at least one memory and computer program compiler configured to, with the at least one processor, cause the controller to perform:
- receiving an operator specification for primitive domain concepts named operators, said operators comprising sensors and/or actuators and/or available micro-functions, said operator specification defining inputs and/or outputs of said primitive domain concepts;
- receiving a domain model specification for abstract domain concepts, said domain model specification comprising rules that define logical relations between an abstract domain concept and one or more of said primitive domain concepts;
- receiving a condition specification defining said a situational condition using said abstract domain concepts;
- using said rules of said domain model specification to transform said situational condition into one or more queries, wherein a query comprises a chain of logical conditions that can be measured or calculated using said primitive domain concepts;
- using said operator specification to transform one or more of said queries into respective dataflows corresponding to computer programs to measure said situational condition in an environment with sensors; and
- deploying and executing one of said computer programs to measure said situational condition based on input from one or more of said sensors.

The object is achieved, according to a fourth example aspect of the present disclosure, to computer readable storage medium as defined by claim 15, comprising computer-executable instructions for performing the following steps when the program is run on a computer:
- receiving an operator specification for primitive domain concepts named operators, said operators comprising sensors and/or actuators and/or available micro-functions, said operator specification defining inputs and/or outputs of said primitive domain concepts;
- receiving a domain model specification for abstract domain concepts, said domain model specification comprising rules that define logical relations between an abstract domain concept and one or more of said primitive domain concepts;
- receiving a condition specification defining a situational condition using said abstract domain concepts;
- using said rules of said domain model specification to transform said situational condition into one or more queries, wherein a query comprises a chain of logical conditions that can be measured or calculated using said primitive domain concepts;
- using said operator specification to transform one or more of said queries into respective dataflows corresponding to computer programs to measure said situational condition in an environment with sensors; and
- deploying and executing one of said computer programs to measure said situational condition based on input from one or more of said sensors.

### Brief Description of the Drawings

Some example embodiments will now be described with reference to the accompanying drawings.
Fig. 1 shows an example embodiment 100 of the computer program generating apparatus;
Fig. 2 shows another example embodiment 200 of the computer program generating apparatus;
Fig. 3 is a flow diagram illustrating the steps executed by the solver module in example embodiments of the computer program generating apparatus;
Fig. 4, Fig. 5 and Fig. 6 represent flow diagrams illustrating the steps executed by the dataflow generator in example embodiments of the computer program generating apparatus; and
Fig. 7 shows an example embodiment of a suitable computing system 700 for performing one or several steps of the computer program generation method.

### Detailed Description of Embodiment(s)

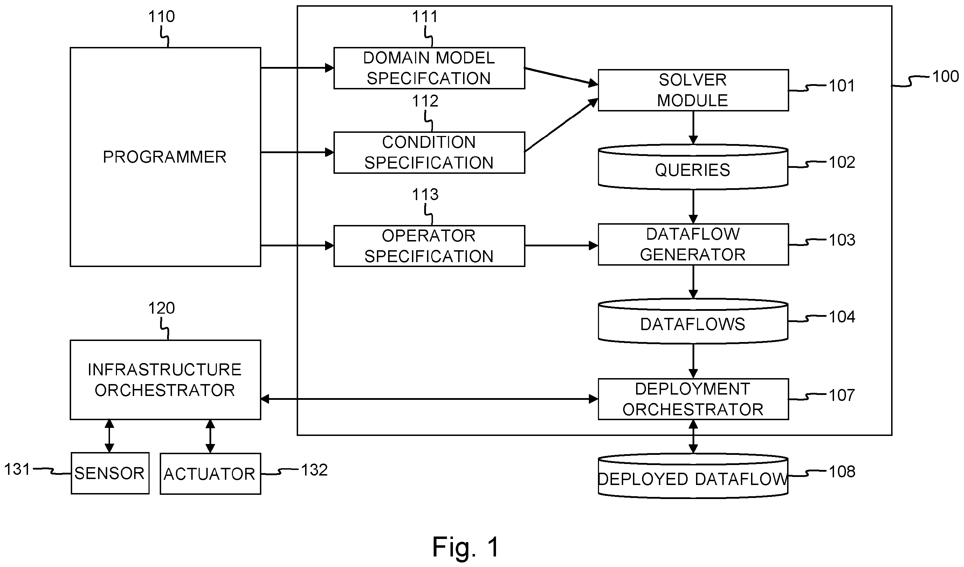

Fig. 1 shows the functional building blocks 101-107 and 111-113 of an example embodiment 100 of a computer program generating apparatus that generates computer programs, also named dataflows, to measure a situational condition or abstract phenomenon in an environment with sensors 131 and actuators 132. A programmer 110 specifies the inputs of the computer program generating apparatus 100. These inputs consist of three parts: a domain model specification 111, a condition specification 112 and an operator specification 113. The operator specification 113 comprises a specification for each data source, i.e. each sensor 131, each data sink, i.e. each actuator 132, and each available micro-function, jointly called the primitive domain concepts or operators. The operator specification describes at least the expected inputs and/or expected outputs of the operators. In addition thereto, the operator specification may describe metadata of the operator, such as its accuracy, its false positive rate, etc. The set of operator specifications 113 form the so-called primitive domain concepts, i.e. sources of variables directly measurable using a sensor 131, sinks that map a digital message one-to-one onto an action of an actuator 132, and data transformations which are available as micro-functions. The domain model specification 111 specifies abstract domain concepts, i.e. abstract phenomena or situational conditions, via rules that define logical relations between the abstract domain concepts one or more primitive domain concepts, such that each abstract domain concept can be put in relation with the primitive domain concepts specified in the operator specification. The condition specification 112 specifies the situational condition or abstract phenomenon to be measured by the computer programs that will be generated. The condition specification 112 defines the situational condition using the domain concepts, and further may define action(s) to execute by the actuators 132 when the situational condition is satisfied. It is remarked that the domain model specification 111 and operator specification 113 may consist of several files, some of which are reused and some of which are application-specific.

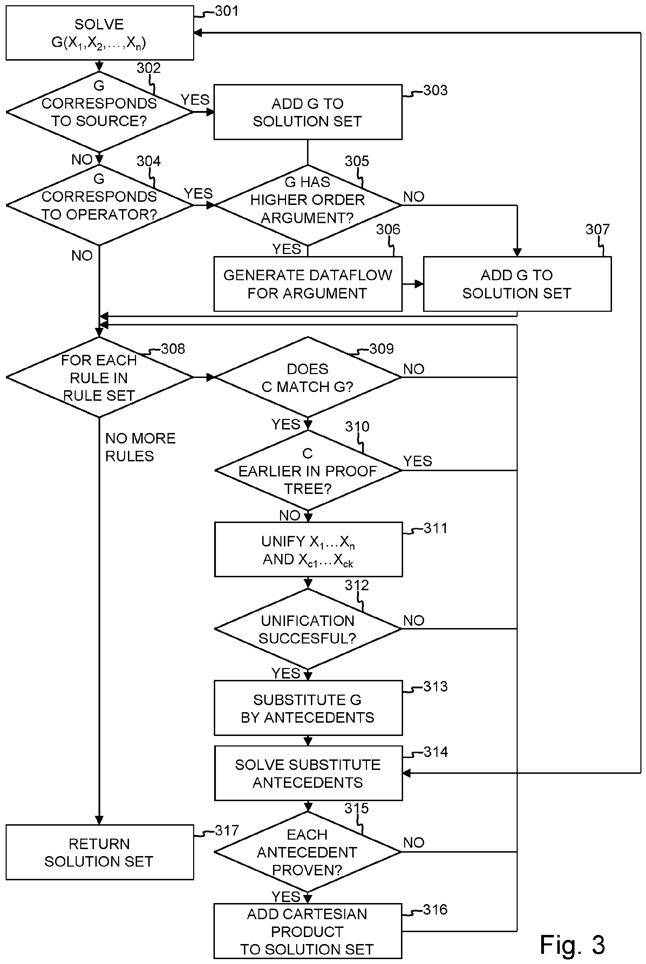

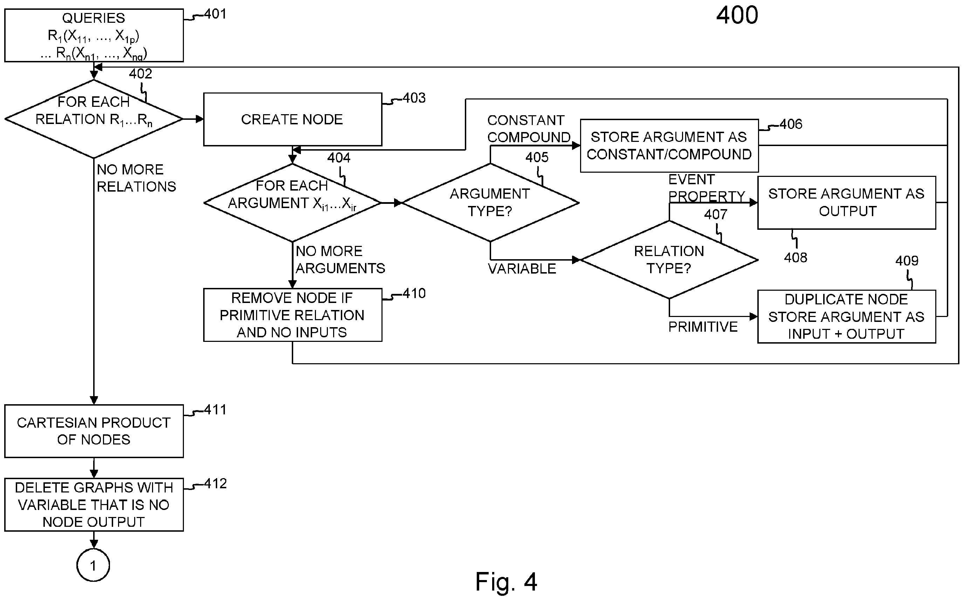

Fig. 1 further shows that the domain model specification 111 and condition specification 112 are used by a solver module 101 that generates queries 102, and that the operator specification 113 is used by a dataflow generator 103 that transforms the queries 102 into dataflows or computer programs 104. In a first step, the solver module 101 transforms the high-level situational condition specified in the condition specification 112 into low-level queries 102 using the domain model specification 111. A query 102 is logically equivalent with the situational condition but all its parts can be measured or computed directly: a query in other words specifies which properties and events to observe via the sensor(s) 131, which micro-functions to execute, and which event to fire by controlling the actuator(s) 132. A possible implementation of the solver module 101 will be described in more detail below, with reference to Fig. 3. Thereafter, the dataflow generator 103 generates one or several dataflows 104. The dataflow generator 103 transforms each query 102 into a dataflow graph using the operator specifications 113. Thereto, each part of a query 102 is transformed into the corresponding source, sink, or micro-function specification, or into a subgraph consisting of these. These are then linked together to form a dataflow that is in turn converted into a program script that is executable for instance on a cloud computing platform. A possible implementation of the dataflow generator 103 will be described in more detail below, with reference to Fig. 4, 5 and 6. A deployment orchestrator 107 selects the deployed dataflow 108 and deploys the selected dataflow 108 through an infrastructure orchestrator 120, for instance a cloud computing platform with connectivity to the sensor(s) 131 and actuator(s) 132. An example of such an infrastructure orchestrator 120 is the World Wide Streams platform or WWS platform of Nokia.

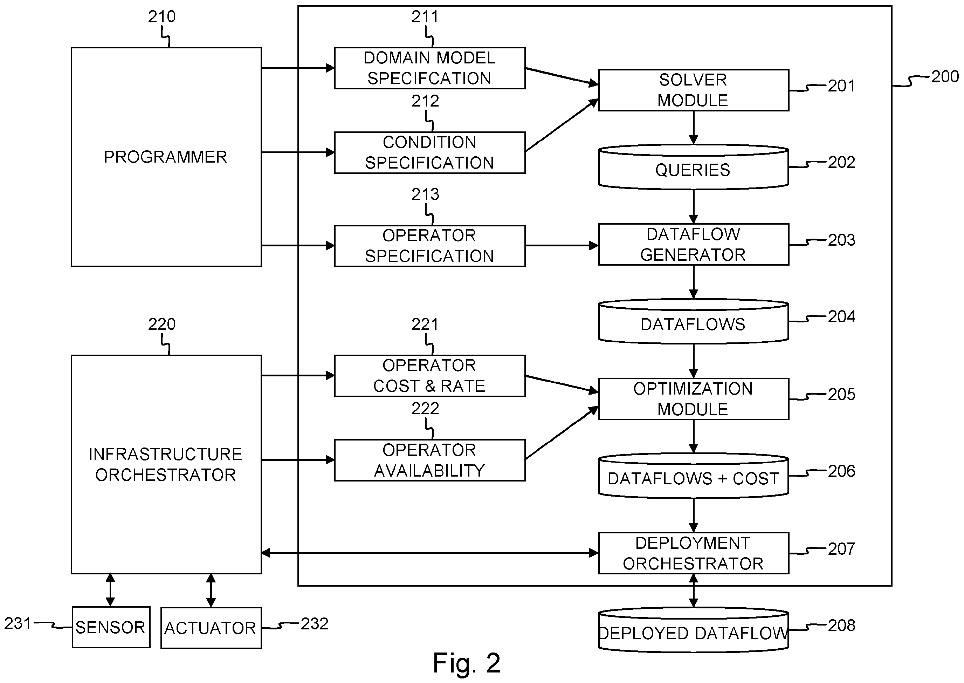

Fig. 2 shows the functional blocks 201-207, 211-213, 221-222 of another embodiment 200 of a computer program generating apparatus that generates computer programs or dataflows to measure a situational condition or abstract phenomenon in an environment with sensors 231 and actuators 232. The operation of the functional blocks 201-204, 211-213 is similar to the operation of the respective corresponding functional blocks 101-104, 111-113 in the embodiment illustrated by Fig. 1. Also, the role of the programmer 210 is similar to the role of the programmer 110 in Fig. 1. In addition thereto, the computer program generating apparatus 200 of Fig. 2 comprises an optimization module 205 that selects the optimal computer program or dataflow amongst the dataflows produced by the dataflow generator 204. An operator cost and rate module 221 collects information indicative for the cost per invocation of an operator according to a certain cost metric, and information indicative for the invocation rate of an operator. The cost metric may for instance be the performance, accuracy, confidence level, etc., or a combination thereof. An operator availability module 222 further collects information on the availability of operators in the environment. The cost and rate information is used by the optimization module 205 to calculate a total cost for each dataflow, resulting in an overview of the dataflows and their respective costs 206. This allows the optimization module 205 to select the most optimal dataflow for deployment by the deployment orchestrator 207, i.e. the dataflow with the lowest total cost. In addition thereto, the optimization module 205 may continuously monitor which sensors and/or actuators are available as this information is collected by the operator availability module 222. When the availability of sensors and/or actuators changes, the selection of the optimal dataflow by the optimization module 205 may be re-executed. In case the new optimal dataflow differs from the currently deployed dataflow 208, the deployment orchestrator 207 is instructed to deploy the new optimal dataflow, while the older one gets cleaned up to avoid wasting resources. To enable a seamless transition, the new and old computer program can temporarily run in parallel using a phase-in/phase-out strategy.

The operator availability, cost and invocation rate are typically provided by the infrastructure orchestrator 220, i.e. a platform that connects with the sensor(s) 231 and actuator(s) 232. It is noted however that it is also possible that the programmer 210 changes the operator specification 213, for instance to onboard a new operator, in which case the generation of dataflows by the dataflow generator 203, the selection of an optimal dataflow by the optimization module 205 and deployment of the selected optimal dataflow by the deployment orchestrator 207 are re-executed. It is also possible that the programmer changes the domain model specification 211 or the condition specification 212, in which case the transformation of the situational condition into logical queries by the solver module 201, the generation of dataflows by the dataflow generator 203, the selection of an optimal dataflow by the optimization module 205 and deployment of the selected optimal dataflow by the deployment orchestrator 207 are re-executed.

As an illustration, one could consider the domain of Cooperative Intelligent Transport Systems (CITS) and imagine that computer programs must be generated for a car with an automatic braking system to prevent collisions. There are several ways to implement such an automatic braking system. In a first possible implementation, the system relies on a sensor in the car that detects slow driving cars or cars in front of it that are standing still. A second possible implementation relies on road infrastructure such as road-side cameras and antennas transmitting signals indicative for a traffic jam ahead, detected by the road-side cameras. A third possible implementation relies on devices in other vehicles emitting signals indicative for their respective position and speed. Depending on the context, a different implementation is preferably executed. In a city centre with extensive 5G network coverage, the third implementation that relies on large amounts of messages sent with low latency may be preferred. On a highway equipped with road-side infrastructure, the second implementation is preferred. In the country-side without specific road infrastructure and without advanced network coverage, the first implementation relying on the car's own sensor(s) may be the sole available option.

According to the current state of the art, programmers must manually generate the three implementations separately, and create an automated selector to swap between them based on the type of location or the availability of sensors. The computer program generating apparatus of Fig. 1 or Fig. 2 however makes it possible to generate the three implementations automatically, and to switch automatically between them while the car is driving.

Below, some code examples are given for the CITS use case introduced above. The code examples are short snippets from the complete programs.

The programmer provides the operator specification, the domain model specification, and the condition specification.

The operator specification specifies sources (sensors), sinks (actuators) and micro-functions. Sources include for instance a sensor that measures distances in a car, a GPS sensor in a car that returns its position, the speedometer present in a car, road-side cameras that measure the cars' position and speed, etc. Sinks include for instance actuators that brake the car, that show a message on a user's dashboard, that show a message on a road sign, etc. Operators include micro-functions to calculate the distance between two positions, to calculate braking distances, etc. The operator specification also specifies how these operators map onto domain concepts. The micro-function "calculate_distance" for instance maps onto the domain concept "distance".
A sensor is for instance defined as follows:
camera:
- type: source
- format: json
- relation: camera("camera_id", "image")
A micro-function is for instance defined as follows:
calculate_distance:
- type: operator
- relation: distance(Position1, Position2, Distance)
- signature: (Position1, Position2) -> Distance

The domain model specification specifies how abstract domain concepts can be derived from primitive domain concepts. As an example, the abstract concept "collisionPossible" can be derived from primitive concepts like "distance" and "smallerThan". This may be specified in the domain model specification by the following rule:
distance(Car1, Car2, D) and brakingDistance(Car1, D_Safe) and
smallerThan(D, D_Safe) -> collisionPossible(Car1, Car2)
As another example, the abstract concept "speed" can be derived from the primitive concept "position". This may be specified in the domain model specification by the following rule:
position(Car1, Time1, Pos1) and position(Car1, Time2, Pos2) and
calculateAvgSpeed(Pos1, Pos2, Time1, Time2, Speed) -> speed(Car1, Speed)

The condition specification specifies the situational condition "collisionPossible(Car1, Car2)" and a corresponding action to execute, for instance "brake" or "sendAlert". The condition specification may for instance be as follows:
if collisionPossible(Car1, Car2) then sendAlert(Car1, "Collision possible!")

From the operator specification, domain model specification and condition specification, the solver module and dataflow generator will generate the three implementations identified above.

Additionally, the infrastructure may specify which operators are available, as well as their cost and output rate. For instance, the camera may have a cost of 10 and may produce events at a rate of 1 message per second, the "calculate_distance" operator may have a cost of 40 and may produce one output event for every combination of its inputs, i.e. its output rate corresponds to the multiplication of its input rates "Position1" and "Position2". The operator cost and rate information obtained from the infrastructure may then be as follows:
camera:
   - cost: 10
   - rate: 1
calculate_distance:
   - cost: 40
   - rate: Position1 * Position2
It is noted that the cost of an operator in general is a number that can represent any parameter the user wants to optimize, like for instance the latency, the accuracy, the throughput, etc.

Fig. 3 shows the steps executed by the solver module 101, 201 in example embodiments of the computer program generating apparatus 100, 200. The solver module 101, 201 transforms a high-level situational condition into a low-level queries. In the situational condition, the programmer 110, 210 specifies has specified what the computer program should measure, using the terminology of the domain. A query is logically equivalent with the situational condition but only consists of parts that can be measured or computed directly using the available sensors or micro-functions. The solver module 101, 201 uses the rules specified in the domain model specification 111, 211 to transform the situational condition into one or more queries.

More particularly, to solve a goal G with arguments X₁, X₂, ..., Xₙ as specified in 301 of Fig. 3, for instance to solve the situational condition specified in the condition specification 112, 212, the following steps are executed by the solver module 101, 201. In step 302 it is verified if the goal G is a property or event for which a corresponding source (or sensor) exists in the operator specification 113, 213. If this is the case, the goal G is added to the solution set in step 303. If this is not the case, it is verified in step 304 if the goal G is a primitive function for which a corresponding operator (or micro-function) exists in the operator specification 113, 213. If the goal G is a primitive function, it is checked in step 305 if G has an argument that is a higher-order condition or relation in itself. If this is the case, a dataflow must first be generated for the higher-order argument, as is indicated by step 306, and the argument is replaced by a newly generated variable that corresponds to the output of that dataflow. This is done for each higher-order argument of goal G. If the goal G is a primitive function without higher-order arguments, goal G is added to the solution set in step 307.

If goal G neither corresponds to a property or event (directly measurable) nor corresponds to a primitive function, goal G is compared with every rule in the rule set of the domain model specification 111, 211, as is indicated by step 308, in order to solve the goal G by recursively generating a proof tree. The proof tree is a tree of nodes wherein the root node corresponds to the goal G and children nodes correspond to lower-order conditions to be solved recursively to prove the parent node. Each of the rules in the rule set consists of one or more antecedents A₁ ... Aₘ and a consequent C and therefore can be expressed as follows:
A₁(X₁₁,...,X₁ᵢ) AND ... AND Aₘ(Xₘ₁,...,Xₘⱼ) -> C(X_{c1},...,X_{ck})
with n, i, j and k being positive integer values.
In step 309, the rule's consequent C is compared with the goal G. If the rule's consequent C does not match the goal G, the rule is skipped and the next rule in the rule set is considered in step 308. If the rule's consequent C matches the goal G, it is verified in step 310 if a condition or relation equivalent to the rule's consequent C appears already higher up in the proof tree. If this is the case, the rule is skipped to avoid infinite recursion and the next rule in the rule set is considered in step 308. If no condition or relation equivalent to the rule's consequent C appears higher up in the proof tree, the arguments X₁ ... Xₙ of the goal G and the arguments X_{c1} ... X_{ck} of the rule's consequent C are unified in step 311. Step 312 verifies if the unification is successful. If the unification fails, the rule is skipped and the next rule in the rule set is considered in step 308. If the unification succeeds, the goal G is substituted by the antecedents A₁ ... Aₘ of the rule in step 313, and each of the substitute antecedents A₁ ... Aₘ is solved in a similar way as goal G, as is indicated by step 314. In step 315 it is checked if all substitute antecedents are proven. If this is not the case, the rule is skipped and the next rule in the rule set is considered in step 308. If all antecedents are proven, the resulting proof tree is added to the solution set in step 316. If there is more than one way to prove an antecedent, a cartesian product of the solutions of each antecedent is added to the goal's solution set in step 316. This way, a final set of proof trees is generated that is returned as the solution set in step 317. Each proof tree is then converted to a query by taking the conjunction of its leaves using the logical AND operator. As a result, each proof tree in the solution set is converted into a logical chain of conditions that can be measured or calculated using primitive domain concepts.

The solver module 101, 201 thus reduces the goal G to properties, events, and functions that can be measured or computed at run time. Hence, the goal G is not proven but reduced to a query of logical conditions that can be shown to be true (or not) at run time. The solver module 101, 201 generates all possible solutions by considering all rules in the rule set in a recursive approach.

For the CITS example described above, the situational condition is collisionPossible(Car1, Car2), i.e. the condition or goal to be proven in order to detect if a collision is possible between two cars. A possible corresponding query that will be generated by the solver module 101, 201 is:
position(Car1, Pos1) AND position(Car2, Pos2) AND distance(Pos1, Pos2,
Dist) AND speed(Car1, Speed1) AND speed(Car2, 0) AND brakingDistance(Speed1, Dist_Brake) AND smallerThan(Dist, Dist_Brake)
Herein, the positions Pos1, Pos2 of two cars Car1, Car2 are measured, their current distance Dist is calculated, the speed Speed1 of the first car is measured, its braking distance Dist_Brake is calculated, and if the second car is stopped - its speed is set 0 - and the current distance Dist is smaller than the braking distance Dist_Brake, the conclusion is drawn that a collision is possible. Each part of the query can either be measured directly using a sensor (position, speed) or can be calculated using a micro-function (distance, brakingDistance, smallerThan).

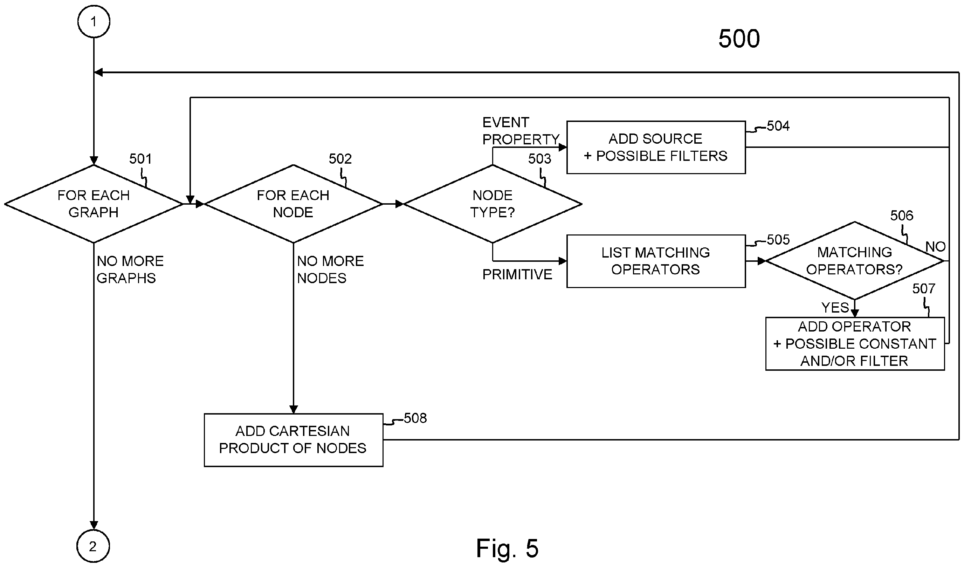

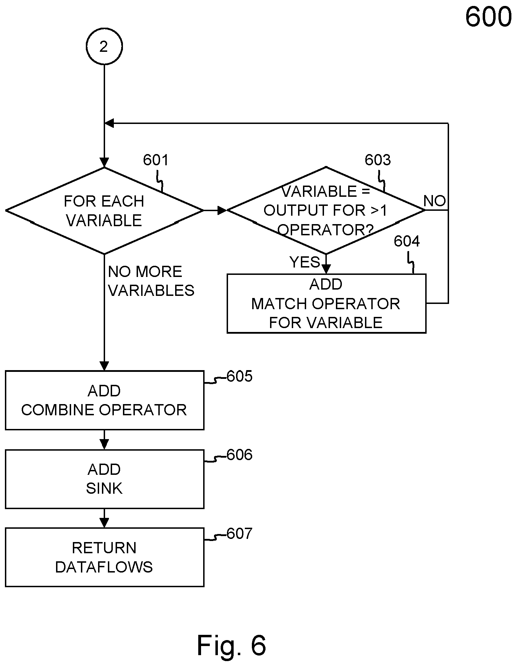

Each query generated by the solver module 101, 201 is transformed into a dataflow or computer program by the dataflow generator 103, 203 in three phases. Firstly, the query is transformed into a relation graph, i.e. a graph of logical relations. The steps executed thereto in example embodiments are illustrated by the flow diagram 400 in Fig. 4. Secondly, each relation in that relation graph is replaced by a subgraph of operators. The flow diagram 500 drawn in Fig. 5 illustrates how this is done in example embodiments. Thirdly, some additional nodes are added to turn the result into a complete dataflow. Thereto, example embodiments execute the steps of flow diagram 600 shown in Fig. 6.

Reference is made to flow diagram 400 in Fig. 4 which illustrates the steps executed by the dataflow generator 103, 203 for constructing the relation graph from a query. The query is outputted by the solver module 101, 201 consists of a logical sequence of conditions or relations and therefore can be expressed as follows: R₁(X₁₁, ..., X₁ₚ) ... Rₙ(Xₙ₁, ..., X_{nq}), with n, p and q being positive integers. From such query a set of possible graphs that connect the query's relations is created. These are the so-called relation graphs, constructed as follows.

A query is selected in step 401. Each relation R₁ ... Rₙ in the query is considered separately, as indicated by step 402. For the relation under consideration, a node is created for the relation graph in step 403. The node can store inputs, outputs, constants, and compound terms. Next, as is indicated by step 404, each argument Xᵢ₁ ... Xᵢᵣ of the relation is considered, and the argument type is extracted in step 405. Every argument of the relation that is a constant or a compound term is stored in the node as such, as is indicated by step 406. For every argument that is a variable, the relation type is assessed in step 407. If the relation is a property or event, the argument must be an output. Consequently, the argument is stored as an output in the node in step 408. If the relation is a primitive function, the argument can be an input or an output. Therefore, the node is duplicated in step 409. The argument is then stored as input in the original node and as output in the duplicated node, or vice versa. For a primitive relation with n variable arguments, this generates 2ⁿ possible nodes. However, some of these nodes can be removed. If the relation is a primitive, it must have at least one input argument, because every operator needs at least one input to trigger it. Thus, nodes without inputs are removed in step 410. The possible nodes of all relations R₁ ... Rₙ are then combined via a cartesian product to create relation graphs. This is realised in step 411. Some of these graphs are impossible and therefore can be removed. For every variable, it is checked in step 412 whether at least one node has it as output as the variable's value must be generated somewhere. If this is not the case, the graph is removed in step 412.

Reference is made to flow diagram 500 in Fig. 5 which illustrates the steps executed by the dataflow generator 103, 203 for constructing subgraphs per relation. For every relation in the relation graph, a dataflow subgraph will be generated. Within each graph, each node is considered as indicated by steps 501 and 502. Then, in step 503, the node type is extracted. A distinction is made between primitive functions (which will be mapped to operators) and properties and events (which will be mapped to sources).

A primitive function may map to several operators, depending on which variables are used as inputs or outputs. All matching operators are listed in step 505, and a matching operator is searched in the operator specifications in step 506. If no matching operator is found, the current relation graph cannot be converted into a dataflow. If a matching operator is found, the operator is added in step 507. It is noted that operators that contain a constant argument, e.g. the operator smallerEq(Distance, 1.5), need to be preceded by an operator that generates the constant or need to be followed by an operator that filters for the constant. Adding all these operators is done in step 507.

A property or event is mapped to a custom operator that assigns data from the source's input to the variables that appear throughout the rest of the graph. This is done in step 504. Again, when the relation contains a constant, an additional operator that filters for the constant needs to be included.

A cartesian product of the nodes is created in step 508 before the next relational graph is considered in step 501.

Reference is made to flow diagram 600 in Fig. 6 which illustrates the steps executed by the dataflow generator 103, 203 for transforming the relation graph into a dataflow. In this last phase, dataflow subgraphs that were created for each relation in the previous phase are combined into a complete dataflow. Furthermore, a few additional nodes are added.

Thereto, every variable is considered in step 601. When the variable appears as output for multiple operators, a condition that is checked in step 603, a match operator is added for that variable in step 604. This match operator will keep a history of events from every one of its inputs, and will output an event when a value matches for all of them. This match operator also takes into account the timestamp of events: when a newer event from the same source arrives, the older event is deleted.

Up to this point in the construction of the dataflow, the dataflow may have several nodes whose outputs are not connected to any further nodes. These outputs are connected as inputs to a combine operator in step 605. The combine operator returns one event that combines them. The combine operator also ensures that, if the same event travelled through different parts of the dataflow, only events with the same timestamp are combined.

At last, the combine operator is connected to a sink operator in step 606. The sink operator transforms the logical variables back into an event and sends it to the sink, using the operator specification. This completes the dataflow. All dataflows generated this way are returned in step 607 as output of the dataflow generator 103, 203.

The above-described process can result in many solutions: one situational condition can be transformed into many queries, and from one query many dataflows can be generated. All these dataflows measure the situational condition, but they can have different costs. Therefor, in embodiments, an optimization module 205 calculates an estimate of their cost and selects the optimal dataflow.

To achieve this, the cost 221 per invocation for each operator is obtained from the infrastructure orchestrator 220 or as part of its operator specification 213. The cost may be a simple number. It is up to the developer to choose what this number represents, e.g. dollar cost, the amount of (milli)seconds that the operator runs, its energy usage, etc. Additionally, the output rate 221 of each operator is obtained from the infrastructure orchestrator 220 or as part of the operator specification 213. The output rate or invocation rate of an operator may be expressed as an amount of events per second. For a source, this may be a simple number. For instance, a camera might produce images at a rate of 24 frames per second. For a micro-service, the invocation rate may be expressed as a function of the rates of its inputs. For instance, a micro-function "distance(Pos1, Pos2, Dist)" that calculates the distance between two points has the invocation rate Pos1 * Pos2, where Pos1 and Pos2 are the rates of its inputs as it generates an event for each possible combination of its inputs.

All these costs and rates 221 are then used by the optimization module 205 to calculate the total cost 206 of a dataflow. To calculate the total cost, the optimization module 205 for instance topologically sorts the dataflow, and then calculates each operator's output rate from the rates of its inputs. Therefrom, the optimization module 205 can calculate each operator's cost per second by multiplying the cost per invocation with the rate of invocations per second. This results in the total cost of all operators in the dataflow being calculated. At last, the optimization module 205 sums the costs of all operators in the dataflow to get the total cost of the dataflow. When this is done for all dataflows generated by the dataflow generator 203, the optimization module 205 can select the cheapest dataflow 208 for deployment.

After a dataflow has been generated and selected, it needs to be deployed by the deployment orchestrator 207. If an existing dataflow is running that was previously generated and deployed to measure the same situational condition, the old dataflow should be replaced with the new one. A straightforward implementation simply deploys the new dataflow and destroys the old one. However, this is only possible if the old dataflow does not contain any state that must be maintained.

In more advanced embodiments, the new dataflow is deployed while the old one is still running, and input is temporarily sent to both dataflows as part of a phase-in/phase-out strategy. Both dataflows remain active and the old dataflow is only destroyed when the new one has been fully initialized. What this entails can be specified by the developer. The new dataflow may for instance be fully initialized when the new dataflow starts producing output. For instance, if the dataflow calculates a moving average over a 5 minute time window, the new dataflow will start producing output after 5 minutes, and at that point the old dataflow can be destroyed.

The new dataflow may also require some historic input data for its initialization. To support this, the developer may indicate that a source must be replayed when a new dataflow is deployed. This means that old input events are captured and sent again to the new dataflow when it is started. For example, in the example of the CITS system that may need to map license plates to persons, the corresponding source would be indicated as replay and its input data would be resent to a new dataflow when it is deployed.

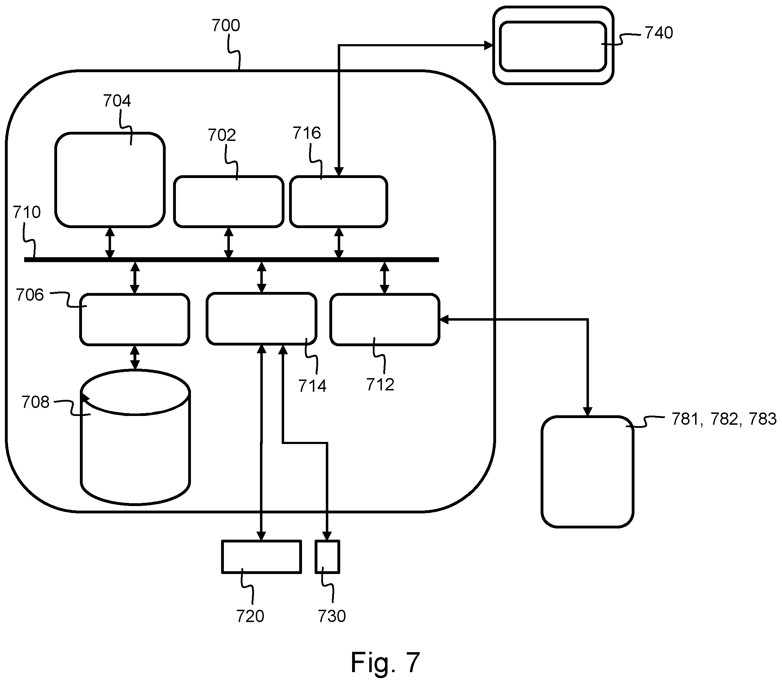

Fig. 7 shows a suitable computing system 700 enabling to implement embodiments of the apparatus and method to generate computer programs. Computing system 700 may in general be formed as a suitable general-purpose computer and comprise a bus 710, a processor 702, a local memory 704, one or more optional input interfaces 714, one or more optional output interfaces 716, a communication interface 712, a storage element interface 706, and one or more storage elements 708. Bus 710 may comprise one or more conductors that permit communication among the components of the computing system 700. Processor 702 may include any type of conventional processor or microprocessor that interprets and executes programming instructions. Local memory 704 may include a random-access memory (RAM) or another type of dynamic storage device that stores information and instructions for execution by processor 702 and/or a read only memory (ROM) or another type of static storage device that stores static information and instructions for use by processor 702. Input interface 714 may comprise one or more conventional mechanisms that permit an operator or user to input information to the computing device 700, such as a keyboard 720, a mouse 730, a pen, voice recognition and/or biometric mechanisms, a camera, etc. Output interface 716 may comprise one or more conventional mechanisms that output information to the operator or user, such as a display 740, etc. Communication interface 712 may comprise any transceiver-like mechanism such as for example one or more Ethernet interfaces that enables computing system 700 to communicate with other devices and/or systems, for example with other computing devices 781, 782, 783. The communication interface 712 of computing system 700 may be connected to such another computing system by means of a local area network (LAN) or a wide area network (WAN) such as for example the internet. Storage element interface 706 may comprise a storage interface such as for example a Serial Advanced Technology Attachment (SATA) interface or a Small Computer System Interface (SCSI) for connecting bus 710 to one or more storage elements 708, such as one or more local disks, for example SATA disk drives, and control the reading and writing of data to and/or from these storage elements 708. Although the storage element(s) 708 above is/are described as a local disk, in general any other suitable computer-readable media such as a removable magnetic disk, optical storage media such as a CD or DVD, -ROM disk, solid state drives, flash memory cards, ... could be used.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer program generating apparatus (100, 200) adapted to generate computer programs (104, 204) to measure a situational condition in an environment with sensors (131, 231) and to deploy and execute one of the computer programs (108, 208) to measure said situational condition based on input from one or more of said sensors (131, 231), said computer program generating apparatus (100, 200) comprising:
- means for receiving an operator specification (113, 213) for primitive domain concepts named operators, said primitive domain concepts corresponding to sensors and/or actuators and/or available micro-functions, said operator specification (113, 213) defining inputs and/or outputs of said primitive domain concepts;
- means for receiving a domain model specification (111, 211) for abstract domain concepts, said domain model specification (111, 211) comprising rules that define logical relations between an abstract domain concept and one or more of said primitive domain concepts;
- means for receiving a condition specification (112, 212) defining said situational condition using said abstract domain concepts;
- a solver module (101, 201) configured to use said rules of said domain model specification (111, 211) to transform said situational condition into one or more queries (102, 202), wherein a query comprises a chain of logical conditions that can be measured or calculated using said primitive domain concepts; and
- a dataflow generator module (103, 203) configured to use said operator specification (113, 213) to transform said one or more queries (102, 202) into respective dataflows (104, 204) corresponding to said computer programs.

2. A computer program generating apparatus (100, 200) according to claim 1, wherein said solver module (101, 201) is configured to recursively solve conditions starting from said situational condition, and wherein to solve a condition said solver module (101, 201) is adapted to:
- verify (302) if said condition has a corresponding sensor specified in said operator specification (113, 213) and add (303) said condition to a solution set if this is the case;
- verify (304) if said condition has a corresponding micro-function specified in said operator specification (113, 213) and add (307) said condition to said solution set if this is the case;
- verify (305) if said condition has an argument that is a condition in itself, the latter being a lower-order condition, and to first solve (306) said lower-order condition if this is the case.

3. A computer program generating apparatus (100, 200) according to claim 2, wherein to solve a condition said solver module (101, 201) is further configured to generate one or more proof trees, a proof tree being a tree wherein the root node corresponds to said condition and children nodes correspond to lower-order conditions to be solved to prove the parent node, and wherein said solver module (101, 201) in order to prove said condition is further configured for said rules of said domain model specification (111, 211) to:
- verify (309) if the consequent of said rule matches with said condition, and skip said rule if this is not the case;
- unify (311) the arguments of said rule with the arguments of said condition, skip said rule if this fails, and substitute (313) said condition by the antecedents of said rule if this succeeds;
- prove (314) the antecedents of said rule recursively; and
- add (316) the proof tree to said solution set if all antecedents can be proven, add (316) plural proof trees to said solution set if at least one antecedent can be proven different ways, or add no result to the solution set if at least one antecedent cannot be proven.

4. A computer program generating apparatus (100, 200) according to claim 3, wherein to solve a condition said solver module (101, 201) is further configured to convert a proof tree into a query by a conjunction of the leaf nodes of said proof tree through the logical AND operator, said query hence comprising a chain of conditions that can be measured or calculated using said primitive domain concepts.

5. A computer program generating apparatus (100, 200) according to claim 4, wherein to transform a query (102, 202) into a computer program (104, 204) said dataflow generator module (103, 203) is configured to:
- transform (400) said query (401) into a graph of logical relations, a logical relation being either a property, an event or a primitive function, wherein a property corresponds to a predefined relation between arguments that lasts for a time interval, an event corresponds to a predefined relation between arguments that occurs at a time moment, and a primitive function corresponds to a predefined relation between arguments that can be calculated at runtime;
- replace (500) relations in said graph of logical relations by respective subgraphs of operators; and
- transform (600) said graph of logical relations into a dataflow.

6. A computer program generating apparatus (100, 200) according to claim 5, wherein to transform (400) said query (401) into a graph of logical relations, said dataflow generator (103, 203) is adapted to:
- create (403) a node of said graph that can store inputs, outputs, constants and compound terms for each condition in said query, a compound term comprising an atom and zero or more arguments;
- for an argument of said condition that is a constant or compound term, store (406) said argument in said node;
- for an argument of said condition that is a variable:
▪ make (408) the argument an output of said node if said condition is a property or event; or
▪ create (409) a second node and make the argument an input of said node and an output of said second node if said condition is a primitive function;
- remove (410) a node without input if said condition is a primitive function;
- generate (411) said graph of logical relations as a cartesian product of said nodes.

7. A computer program generating apparatus (100, 200) according to claim 6, wherein to replace (500) a relation in said graph of logical relations by a subgraph of primitive domain concepts, said dataflow generator (103, 203) is adapted to:
- when said relation corresponds to a primitive function, map (507) said relation to a corresponding operator using said operator specifications, said operator being a micro-function, and add (507) operators to generate constant inputs and/or to filter constant outputs;
- when said relation corresponds to a property or event, map (504) said relation to an operator using said operator specifications, said operator assigning data from a sensor to a data structure, and add (504) operators to generate constant inputs and/or to filter constant outputs.

8. A computer program generating apparatus (100, 200) according to claim 7, wherein to transform (600) said graph of logical relations into a dataflow, said dataflow generator (103, 203) is adapted to:
- add (604) a match operator when the same variable appears in the output of multiple operators, said match operator being adapted to maintain a history of events from all operators' input, and to output an event when a value matches for all;
- add (605) a combine operator adapted to combine all nodes whose outputs are not connected; and
- add (606) a sink operator, connected to said combine operator to transform logical variables into an event to complete a dataflow.

9. A computer program generating apparatus (200) according to any of the preceding claims, further comprising:
- means (221) for receiving a cost per invocation of an operator according to a cost metric;
- means (221) for receiving an invocation rate of an operator;
- an optimization module (205) configured to determine for different computer programs corresponding to different queries that determine said situational condition a total cost (206) and to select the computer program (208) with lowest total cost for deployment.

10. A computer program generating apparatus (100, 200) according to claim 9, wherein said optimization module (205) is configured to determine for a computer program said total cost (206) as the sum of products of said cost per invocation and said invocation rate across all operators in said computer program.

11. A computer program generating apparatus (100, 200) according to any of the preceding claims, further comprising a deployment module (107, 207) configured to:
- deploy a computer program to determine said situational condition while an other computer program to determine said situational condition is running;
- temporarily send input to both said computer program and said other computer program;
- determine when said computer program is fully initialized; and
- destroy said other computer program after said computer program is fully initialized.

12. A computer program generating apparatus (100, 200) according to claim 11, wherein said deployment module (107, 207) is configured to determine that said computer program is fully initialized when said computer program starts to produce output for said situational condition.

13. A computer program generating method to generate computer programs (104, 204) to measure a situational condition in an environment with sensors (131, 231) and to deploy and execute one of the computer programs (108, 208) to measure said situational condition based on input from one or more of said sensors (131, 231), said computer program generating method comprising:
- receiving an operator specification (113, 213) for primitive domain concepts named operators, said operators comprising sensors and/or actuators and/or available micro-functions, said operator specification (113, 213) defining inputs and/or outputs of said primitive domain concepts;
- receiving a domain model specification (111, 211) for abstract domain concepts, said domain model specification (111, 211) comprising rules that define logical relations between an abstract domain concept and one or more of said primitive domain concepts;
- receiving a condition specification (112, 212) defining said situational condition using said abstract domain concepts;
- using said rules of said domain model specification (111, 211) to transform said situational condition into one or more queries (102, 202), wherein a query comprises a chain of logical conditions that can be measured or calculated using said primitive domain concepts; and
- using said operator specification (113, 213) to transform said one or more queries (102, 202) into respective dataflows (104, 204) corresponding to said computer programs.

14. A controller (700) comprising at least one processor (702) and at least one memory (704) including a computer program, the at least one memory (704) and computer program configured to, with the at least one processor (702), cause the controller (700) to perform:
- receiving an operator specification (113, 213) for primitive domain concepts named operators, said operators comprising sensors and/or actuators and/or available micro-functions, said operator specification (113, 213) defining inputs and/or outputs of said primitive domain concepts;
- receiving a domain model specification (111, 211) for abstract domain concepts, said domain model specification (111, 211) comprising rules that define logical relations between an abstract domain concept and one or more of said primitive domain concepts;
- receiving a condition specification (112, 212) defining a situational condition using said abstract domain concepts;
- using said rules of said domain model specification (111, 211) to transform said situational condition into one or more queries (102, 202), wherein a query comprises a chain of logical conditions that can be measured or calculated using said primitive domain concepts;
- using said operator specification (113, 213) to transform one or more of said queries (102, 202) into respective dataflows (104, 204) corresponding to computer programs to measure said situational condition in an environment with sensors (131, 231); and
- deploying and executing one of said computer programs (108, 208) to measure said situational condition based on input from one or more of said sensors (131, 231).

15. A computer readable storage medium (704) comprising computer-executable instructions of a computer program for performing the following steps when the program is run on a computer:
- receiving an operator specification (113, 213) for primitive domain concepts named operators, said operators comprising sensors and/or actuators and/or available micro-functions, said operator specification (113, 213) defining inputs and/or outputs of said primitive domain concepts;
- receiving a domain model specification (111, 211) for abstract domain concepts, said domain model specification (111, 211) comprising rules that define logical relations between an abstract domain concept and one or more of said primitive domain concepts;
- receiving a condition specification (112, 212) defining a situational condition using said abstract domain concepts;
- using said rules of said domain model specification (111, 211) to transform said situational condition into one or more queries (102, 202), wherein a query comprises a chain of logical conditions that can be measured or calculated using said primitive domain concepts;
- using said operator specification (113, 213) to transform one or more of said queries (102, 202) into respective dataflows (104, 204) corresponding to computer programs to measure said situational condition in an environment with sensors (131, 231); and
- deploying and executing one of said computer programs (108, 208) to measure said situational condition based on input from one or more of said sensors (131, 231).
